# EUROPEAN PATENT SPECIFICATION

(11) **EP 2 733 052 B1**
(45) Date of publication and mention of the grant of the patent: **06.11.2019**
(21) Application number: 13382458.1
(22) Date of filing: 13.11.2013
(51) Int. Cl.: B62D 25/04, B62D 27/02

(54) **Coupling between parts**
Kupplung zwischen Teilen
Couplage entre des parties

(30) Priority: 16.11.2012 ES 201231773
(43) Date of publication of application: 21.05.2014
(73) Proprietor: Seat, S.A., 08760 Martorell (ES)
(72) Inventor: Reina Jimenez Remigio, 08760 Barcelona (ES); Casas Sanchez, Joan Manuel, 08760 BARCELONA (ES)
(74) Representative: Elzaburu S.L.P.

(56) References cited:
- EP-A1- 2 042 668
- US-A1- 2006 053 712
- US-A1- 2011 162 305
- US-B1- 6 438 914

## Description

### Field of the Invention

This invention belongs to the technical field of the automotive industry, specifically the technical field of assembling components and auxiliary structures inside the motor vehicle, and more specifically, relates to the coupling of different parts that form the inner panelling of said motor vehicle. The object of the invention herein is the coupling between parts, resulting in contact between both parts on a section of the connection, by overlapping one over the other, and another section with a clearance between both parts, having a transition section between the aforementioned parts. Specifically, the invention relates to the coupling between the side edge and inner panelling of the C-D pillars in three-door motor vehicles, such that they are coupled properly, resulting in contact between the two components on a connecting portion of the coupling, by means of overlapping of the side edge on the inner panelling of the pillars, and having clearance between them in another portion.

### Background of the Invention

Currently, within the field of the automobile industry, and specifically in the installation of automotive inner panelling, it is necessary to join parts. Specifically, in three-door motor vehicles, the coupling between the side edge and the inner panelling of the C-D pillars is required.

The coupling between the side edge and the inner panelling is usually connected by full or overlapping contact along the entire coupling line of the two parts. This type of coupling creates the problem of there being no space between them to absorb expansion and contraction, such that if expansion occurs, there will be an excessive overlap between the two, while if contractions occur, clearances and gaps will occur between the parts.

On the other hand, if the coupling is performed by means of clearance along the entire coupling line of the two parts, there is no problem in the side area of the this coupling which is hidden by the side of the seats, precisely because such clearance is hidden. However, on the top of the coupling, the clearance is visible, and it is further possible that said clearance is not uniform, therefore adversely affecting the aesthetics of the inner panelling assembly of the motor vehicle.

It was therefore desirable to have an efficient coupling of the side edge to the inner panelling of the C-D pillars in three-door motor vehicles, avoiding the drawbacks existing in the previous couplings of the prior art.

It is known document US2006/053712 disclosing a drywall or transition corner which transitions from a rounded exterior corner to a right angle corner at the trim. The transition corner has an exterior side with depressions which receive mud, an elevated longitudinal bead along an apex of an acute angle of the exterior side which facilitates the receipt of mud. The interior side is shaped to be received by the shape of an exterior corner, which is generally rounded, and is coated with an adhesive means to allow fixing and adjustment of the transition corner at the trim to be in vertical alignment with the exterior corner.

### Description of the Invention

The invention herein solves the problems in the prior art by means of coupling between parts, that connects a first part, having a first end formed by two angled surfaces and a second end formed by a curved surface, with a second essentially flat part, that has an edge parallel to the salient angle formed between the two angled surfaces of the first end of the first part.

A coupling area is formed between the two parts, having a first portion, a second portion and a third connecting portion. The edge of the second part in the first portion is at a constant distance from the salient angle of the first part, while the second part is supported on the curved surface of the second end of the first part in the third portion. The second portion consists of a transition between the first portion and the third portion.

In particular, the first part comprises a support strip on which a support of the second part rests.

In this case, and preferably, the angle forming the supporting surface of the strip of the first part relative to the horizontal direction is greater than the angle the surface of the first part forms relative to the horizontal direction. In this manner, if the second part moves relative to the first, it will always be forced to be in contact with the latter.

In particular, the coupling object of the invention herein is used for inner panelling parts of a motor vehicle.

Specifically, the object of the invention herein can be applied to the coupling between the side edge and the inner panelling of pillars in motor vehicles. This type of coupling is made between a first coupling area of the panelling, and a second coupling area of the side edge, such that a curved coupling area is formed.

This specific coupling has a third connecting portion wherein the side edge overlaps the inner panelling, there being contact between both, and a first connecting portion on which there is a clearance between the side edge and the panelling. A second portion is arranged between the first and the third, and acts as a transition between them.

### Brief description of the drawings

An embodiment of the invention referring to a number of figures is described hereinbelow, illustrated by way of non-limiting example, to facilitate comprehension of the invention.
Figure 1 shows the two parts to be joined by means of the coupling, object of the invention herein, the two parts appearing separately.
Figure 2 shows the two parts of Figure 1, in this case already joined by means of the invention herein.
Figure 3 is a sectional view taken along the C-C plane of Figure 2.
Figure 4 is a sectional view taken along the D-D plane of Figure 2.
Figure 5 shows a sectional view similar to figure 4, according to a preferred embodiment of the invention.
Figure 6 shows a specific use of the invention herein, wherein the parts belong to an inner panelling of a motor vehicle.
   1. first part
   2. second part
   3. first connecting portion
   4. second connecting portion
   5. third connecting portion
   6. support strip of the first part
   7. support of the second part
   8. angle between the surface of the first part with the horizontal plane
   9. angle between the strip supporting surface of the first part with the horizontal plane
   10. first angled surface of the first end of the first part
   11. second angled surface of the first end of the first part
   12. edge of the second part
   13. salient angle between the two angled surfaces of the first end of the first part

### Detailed description of the Invention

The object of the invention herein is a coupling between parts, having angles and curved surfaces, more specifically, the coupling of parts of the inner panelling of a motor vehicle. Particularly, the object of the invention herein is used for coupling the side edge and inner panelling of the C-D pillars in a three-door motor vehicle.

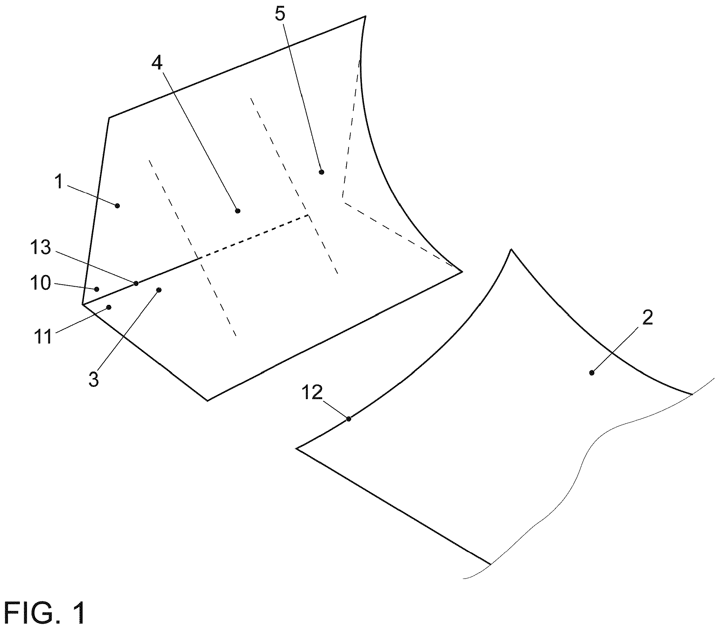

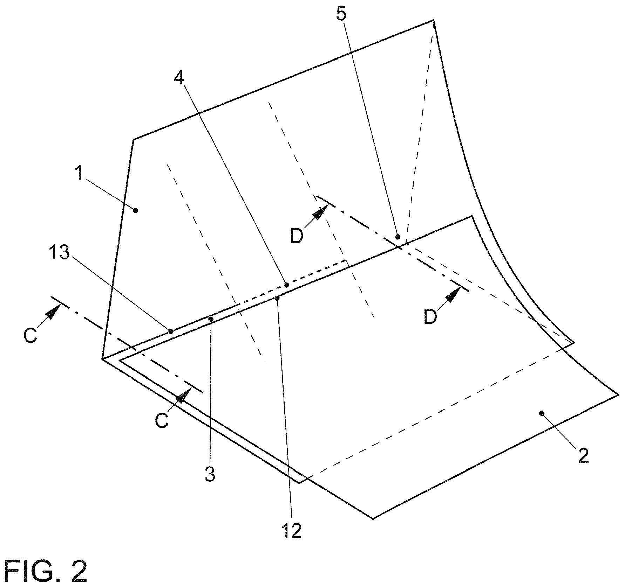

As can be seen in Figures 1 and 2, the coupling, object of the invention herein, is between a first part 1 and a second part 2. The first part 1 has a first end formed by two angled surfaces 10, 11 and a second end formed by a curved surface. The second part 2 is essentially flat and has an edge 12 parallel to the salient angle 13 formed between the two angled surfaces of the first end of the first part 1.

The first part 1 and the second part 2 are joined forming a coupling area formed by a first connecting portion 3, a second connecting portion 4 and a third connecting portion 5, which are differentiated from each other.

In the first portion 3 of the coupling, the edge 12 of the second part 2 is arranged at a constant distance, i.e. parallel to the salient angle 13 of the first part 1, which is the value of the clearance.

The second part 2 in the third portion 5 of the coupling is supported on the curved surface of the second end of the first part 1.

The second portion 4 consists of a transition between the first portion 3 and the third portion 5.

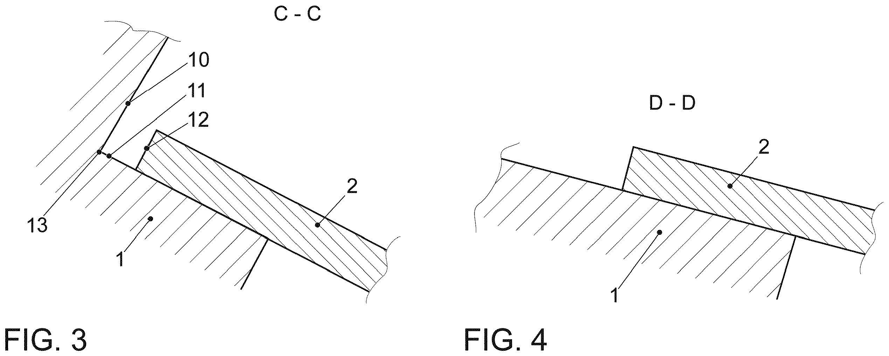

Figures 2, 3 and 4 show in detail the different portions of the coupling, object of the invention herein.

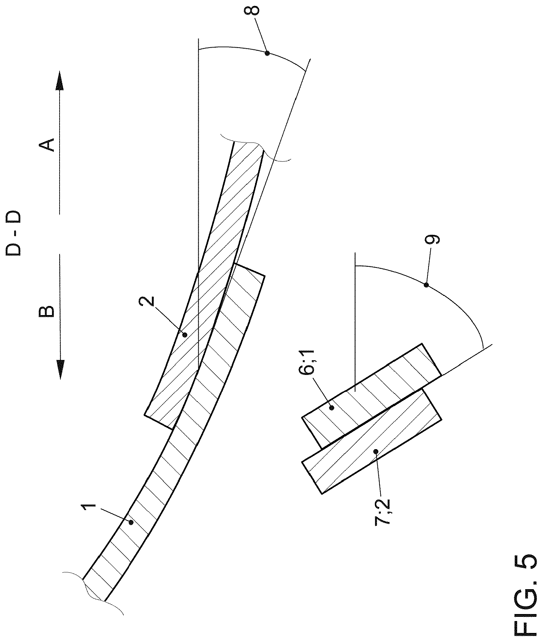

According to a preferred embodiment of the invention, in the coupling, the first part 1 has a support strip 6 on which a support 7 of the second part 2 is supported, as shown in Figure 5. According to this embodiment, the angle 9 forming the supporting surface of the strip 6 of the first part 1 relative to the horizontal plane is greater than the angle 8 the surface of the first part 1 forms relative to the horizontal plane. In this manner, when the part 2 moves in direction B shown in Figure 5, more contact is made with part 1, and it presses thereon due to the slope (angle 8) of the first part 1. In this manner, there will be no unwanted spaces between parts 1 and 2. If, by contrast, part 2 moved in direction A shown in Figure 5, this would result in an unwanted space between the first part 1 and the second part 2 due to the slope (angle 8) of the first part 1. To avoid this, the support strip 6, which is joined to the first part 1, and on which the support 7 of the second part 2 rests and slides underneath, has an angle relative to the horizontal plane equal to or greater than angle 8. In this manner, if the second part 2 moved in direction A shown in Figure 5, it would be forced to move maintaining contact with the first part 1. These relative movements between the first part 1 and the second part 2 may be caused by misalignment, vibrations or thermal expansion.

To form the coupling , the second part 2 is installed relative to the first part 1 in a direction parallel to the salient angle 13 of the first part 1 from the first portion 3 towards the third portion 5.

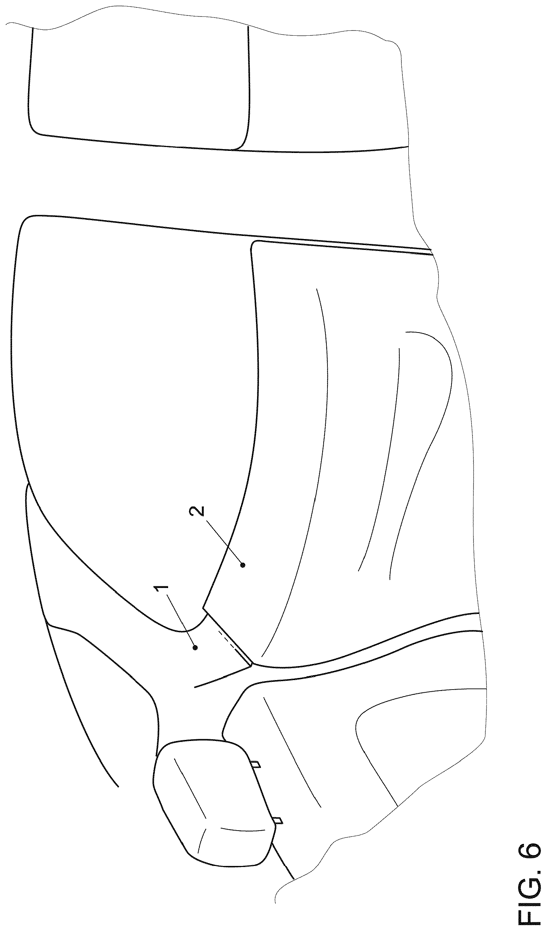

As shown in Figure 6, in a particular embodiment of the coupling, object of the invention herein, the first part 1 and the second part 2 are parts of an inner panelling of a motor vehicle, specifically coupling the side edge to the inner panelling of the C-D pillars is carried out in three-door motor vehicles.

## Claims

1. Coupling between parts that joins a first part (1) having a first end formed by two angled surfaces (10, 11) and a second end formed by a curved surface, with a second substantially planar part having an edge (12) parallel to the salient angle (13) between the two angled surfaces of the first end of the first part (1), forming a coupling area comprising a first connecting portion (3), a second connecting portion (4) and a third connecting portion (5) **characterised in that**
- the edge (12) of the second part (2) in the first portion (3) is at a constant distance from the salient angle (13) of the first part (1),
- the second part (2) in the third portion is supported on the curved surface of the second end of the first part (1)
- the second portion (4) comprises a transition between the first portion (3) and the third portion (5).

2. Coupling between parts according to claim 1 characterised in thatthe first part (1) comprises a support strip (6) on which a support (7) of the second part (2) is supported.

3. Coupling between parts according to claim 2 characterised in thatthe angle (9) forming the supporting surface of the strip (6) of the first part (1) relative to the horizontal direction is greater than the angle (8) that forms the surface of the first part (1) relative to the horizontal direction.

4. Coupling between parts according to claim 1 characterised in thatthe second part (2) is installed relative to the first part (1) in a direction parallel to the salient angle (13) of the first part (1) from the first portion (3) towards the third portion (5).

5. Coupling between parts according to any of the preceding claims **characterised in that** the parts (1,2) are parts of an inner panelling of a motor vehicle.

## Patentansprüche

1. Kupplung zwischen Teilen, die ein erstes Teil (1), aufweisend ein erstes Ende, das durch zwei angewinkelte Flächen (10, 11) gebildet wird, und ein zweites Ende, das durch eine gekrümmte Fläche gebildet wird, mit einem zweiten im Wesentlichen flachen Teil verbindet, das einen Rand (12) aufweist, der parallel zu dem hervorstehenden Winkel (13) zwischen den beiden angewinkelten Flächen des ersten Endes des ersten Teils (1) verläuft, unter Bildung eines Kupplungsbereichs, der einen ersten Verbindungsabschnitt (3), einen zweiten Verbindungsabschnitt (4) und einen dritten Verbindungsabschnitt (5) umfasst, **dadurch gekennzeichnet, dass**
sich der Rand (12) des zweiten Teils (2) im ersten Abschnitt (3) in einem konstanten Abstand von dem hervorstehenden Winkel (13) des ersten Teils (1) befindet,
das zweite Teil (2) im dritten Abschnitt auf der gekrümmten Fläche des zweiten Endes des ersten Teils (1) abgestützt ist
der zweite Abschnitt (4) einen Übergang zwischen dem ersten Abschnitt (3) und dem dritten Abschnitt (5) umfasst.

2. Kupplung zwischen Teilen nach Anspruch 1, **dadurch gekennzeichnet, dass** das erste Teil (1) eine Stützleiste (6) umfasst, auf der ein Stützmittel (7) des zweiten Teils (2) abgestützt ist.

3. Kupplung zwischen Teilen nach Anspruch 2, **dadurch gekennzeichnet, dass** der Winkel (9), der die Stützfläche der Leiste (6) des ersten Teils (1) in Bezug auf die horizontale Richtung bildet, größer als der Winkel (8) ist, der die Fläche des ersten Teils (1) in Bezug auf die horizontale Richtung bildet.

4. Kupplung zwischen Teilen nach Anspruch 1, **dadurch gekennzeichnet, dass** das zweite Teil (2) in Bezug auf das erste Teil (1) vom ersten Abschnitt (3) bis zum dritten Abschnitt (5) in einer zu dem hervorstehenden Winkel (13) des ersten Teils (1) parallelen Richtung installiert wird.

5. Kupplung zwischen Teilen nach einem der vorhergehenden Ansprüche, **dadurch gekennzeichnet, dass** die Teile (1, 2) Teile einer Innenverkleidung eines Kraftfahrzeugs sind.

## Revendications

1. Accouplement entre parties qui joint une première partie (1) ayant une première extrémité formée par deux surfaces coudées (10, 11) et une seconde extrémité formée par une surface courbe, avec une seconde partie sensiblement plane ayant un bord (12) parallèle à l'angle saillant (13) entre les deux surfaces coudées de la première extrémité de la première partie (1), formant une zone de couplage comprenant une première section de connexion (3), une deuxième section de connexion (4) et une troisième section de connexion (5), **caractérisé en ce que**
- le bord (12) de la deuxième partie (2) dans la première section (3) est à une distance constante de l'angle saillant (13) de la première partie (1),
- la deuxième partie (2) de la troisième section est supportée sur la surface courbe de la deuxième extrémité de la première partie (1)
- la deuxième section (4) comprend une transition entre la première section (3) et la troisième section (5).

2. Accouplement entre parties selon la revendication 1 **caractérisé en ce que** la première partie (1) comprend une bande de support (6) sur laquelle repose un support (7) de la seconde partie (2).

3. Accouplement entre parties selon la revendication 2 **caractérisé en ce que** l'angle (9) formant la surface de support de la bande (6) de la première partie (1) par rapport à la direction horizontale est supérieur à l'angle (8) qui forme la surface de la première partie (1) par rapport à la direction horizontale.

4. Accouplement entre parties selon la revendication 1, **caractérisé en ce que** la deuxième partie (2) est installée par rapport à la première partie (1) dans une direction parallèle à l'angle saillant (13) de la première partie (1) depuis la première section (3) vers la troisième section (5).

5. Accouplement entre parties selon l'une des revendications précédentes, **caractérisé en ce que** les parties (1, 2) font partie d'un revêtement intérieur d'un véhicule automobile.
